# EUROPÄISCHE PATENTANMELDUNG

(11) **EP 1 762 407 A2**
(43) Veröffentlichungstag der Anmeldung: **14.03.2007**
(21) Anmeldenummer: 06018158.3
(22) Anmeldetag: 31.08.2006
(51) Int. Cl.: B60H 1/32

(54) **Vorrichtung mit Flüssigkeitsablauf**

(30) Priorität: 13.09.2005 DE 102005043849
(71) Anmelder: Behr GmbH & Co. KG, 70469 Stuttgart (DE)
(72) Erfinder: Dreizler, Sabine, 70619 Stuttgart (DE); Putz, Ingo, Dipl.-Ing., 71636 Ludwigsburg (DE)
(74) Vertreter: Mantel, Berthold Friedrich

(57) **Zusammenfassung**

Die Erfindung betrifft eine Vorrichtung mit einem Gehäuse (1), bestehend aus zumindest einer ersten Baugruppe (2), die zumindest einen ersten Flüssigkeitsablauf (11) aufweist und zumindest einer zweiten Baugruppe (3), die zumindest einen zweiten Flüssigkeitsablauf (16, 22) aufweist, dadurch gekennzeichnet, dass die Auslaufenden (13, 17, 222) des zumindest ersten und zweiten Flüssigkeitsablaufs (11, 16, 21) so angeordnet sind, dass im Mündungsbereich ein gemeinsamer Leitungsanschlussbereich gebildet ist.

## Beschreibung

Die Erfindung betrifft eine Vorrichtung mit einem Gehäuse mit zumindest zwei Flüssigkeitsabläufen gemäß dem Oberbegriff des Anspruchs 1.

Beim Betrieb einer Klimaanlage im Kraftfahrzeug entsteht durch das Abkühlen der Luft an den Verdampferflächen Kondenswasser, das abgeführt werden soll. Zum Abführen des Kondenswassers sind mehrere Maßnahmen bekannt, beispielsweise feinmaschige Tropfenabscheider und Prallwände. Dabei ist üblicherweise der Bodenbereich des den Verdampfer aufnehmenden Gehäuseteils wannenförmig gestaltet und mit einem Ablauf versehen, an den ein Formschlauch angeschlossen wird. Derartige Anordnungen sind beispielsweise aus DE-U-82 28 162, DE-A-31 49 252 und DE-C-32 29 866 bekannt.

Da in modernen Fahrzeugen immer weniger Bauraum für eine Klimaanlage zur Verfügung steht, ist es erforderlich, sehr kompakte Klimaanlagen zu konstruieren, was auf die Querschnitte der Luftführung und die Strömungsgeschwindigkeit der Luft erhebliche Auswirkungen hat. Dies führt dazu, dass die Feuchtigkeit, die sich an den kalten Verdampferflächen niederschlägt und an der Austrittsseite des Verdampfers Wassertropfen bilden kann, vom Luftstrom mitgerissen werden kann. An Gehäusewänden, die den Luftstrom umlenken können diese Wassertropfen auftreffen und an diesen der Schwerkraft folgend ablaufen. Ebenso kann sich das mitgerissene Kondenswasser an Einbauteilen wie beispielsweise einem Heizkörper sammeln, die ebenfalls von der Luft angeströmt oder durchströmt werden. Diese sich im Gehäuse sammelnde Flüssigkeit wird, sofern sie nicht auf geeignete Weise abgeleitet werden kann, durch Verdunstung mit dem Luftstrom ausgetragen und kann zum Beschlagen der Scheiben des Fahrzeugs führen und somit zu einem Sicherheitsrisiko werden.

Das Kondenswasser sammelt sich also nicht nur am Verdampfer sondern auch an anderen, von diesem entfernten Stellen innerhalb der Klimaanlage. Um das sich an unterschiedlichen Stellen der Klimaanlage sammelnde Kondenswasser möglichst einfach abzuführen ist das Gehäuse der Klimaanlage in der deutschen Patentanmeldung DE 44 10 120 A1 mit mehreren Kondenswasserabläufen versehen, die in einen gemeinsamen Abflussbereich münden.

Aufgrund der zunehmenden Modularisierung und Vereinfachung von Herstellungsprozessen von Klimaanlagen sind die Gehäuse oftmals mehrteilig ausgeführt. Eine Gehäuseteilung, die zwei Kondenswasserabläufe trennt ist vielfach nicht zu vermeiden

Es ist daher Aufgabe der Erfindung, eine verbesserte Vorrichtung, welche die Zusammenführung zumindest zweier Flüssigkeitsabläufe ermöglicht, zur Verfügung zu stellen.

Diese Aufgabe wird gelöst durch eine Vorrichtung mit einem Gehäuse mit Merkmalen des Anspruchs 1. Vorteilhafte Ausgestaltungen sind Gegenstand der Unteransprüche.

Die erfindungsgemäße Vorrichtung weist ein Gehäuse auf, welches zumindest aus einer ersten Baugruppe und zumindest einer zweiten Baugruppe besteht, wobei die zumindest erste Baugruppe zumindest einen ersten Flüssigkeitsablauf und die zumindest zweite Baugruppe zumindest einen zweiten Flüssigkeitsablauf aufweist. Die Auslaufenden des zumindest ersten und des zumindest zweiten Flüssigkeitsablaufs sind so angeordnet dass im jeweiligen Mündungsbereich ein gemeinsamer Leitungsanschlussbereich gebildet ist.

Vorteilhafterweise sind dabei die zumindest ersten und zweiten Auslaufenden in Anlage, beispielsweise in flächiger Anlage zueinander, angeordnet.

Es ist günstig wenn die Form zumindest eines Auslaufendes im Querschnitt im Wesentlichen der Form eines Kreissektors oder eines Kreissegments entspricht. Die Spitze eines derartigen Kreissektors ist vorzugsweise abgerundet oder abgeflacht ausgebildet.

Vorteilhafterweise ist das Auslaufende zumindest eines Flüssigkeitsablaufs als Teilzylinder ausgebildet. Die teilzylindrische Form des Auslaufendes kann stetig oder über einen Absatz in eine zylindrische Form in Richtung der Anschlussstelle an der entsprechenden Baugruppe übergehen.

Bevorzugt bilden im zusammengebauten Zustand der zumindest zwei Baugruppen die Auslaufenden der zumindest zwei Flüssigkeitsabläufe einen kreisförmigen oder elliptischen Querschnitt aus, wobei besonders bevorzugt die Auslaufenden der Flüssigkeitsabläufe in ihrer Lage zueinander festlegbar und oder verbindbar sind. So können die Auslaufenden der zumindest zwei Flüssigkeitsabläufe über Rastmittel verbunden sein.

Bevorzugt dienen die Flüssigkeitsabläufe zur Ableitung von Kondenswasser und stellen demnach Kondenswasserabläufe der Vorrichtung dar.

Vorteilhafterweise ist in zumindest einer Baugruppe ein Wärmetauscher aufgenommen, wobei beispielsweise in einer ersten Baugruppe ein Verdampfer und/oder in einer zweiten Baugruppe zumindest ein Heizkörper angeordnet sein können. Besonders günstig ist zumindest ein Flüssigkeitsablauf in einem Bereich unterhalb des Verdampfers und/oder unterhalb des Heizkörpers ausgebildet.

Bevorzugt ist die vorgeschlagene Vorrichtung eine Klimaanlage, insbesondere für ein Kraftfahrzeug ist.

Im Folgenden wird die Erfindung anhand von einem Ausführungsbeispiel, teilweise unter Bezugnahme auf die Zeichnung, im Einzelnen erläutert. In der Zeichnung zeigen:
- Fig. 1: eine schematische Ansicht gemäß einem ersten Ausführungsbeispiel einer Klimaanlage mit zwei Kondenswasserabläufen,
- Fig. 2: eine Schnittdarstellung des Zusammenführungsbereichs der zwei Kondenswasserabläufe der in Fig.1 dargestellten Klimaanlage,
- Fig. 3: eine Detaildarstellung des Zusammenführungsbereichs der zwei Kondenswasserabläufe gemäß einem zweiten Ausführungsbeispiel,
- Fig. 4: eine Detaildarstellung des Zusammenführungsbereichs der zwei Kondenswasserabläufe aus Fig. 3 in einer Ansicht rechts,
- Fig. 5: Schnittdarstellung des Zusammenführungsbereichs- dreier Kondenswasserabläufe gemäß einem dritten Ausführungsbeispiel,
- Fig. 6: Schnittdarstellung des Zusammenführungsbereichs zweier Kondenswasserabläufe gemäß einem vierten Ausführungsbeispiel .

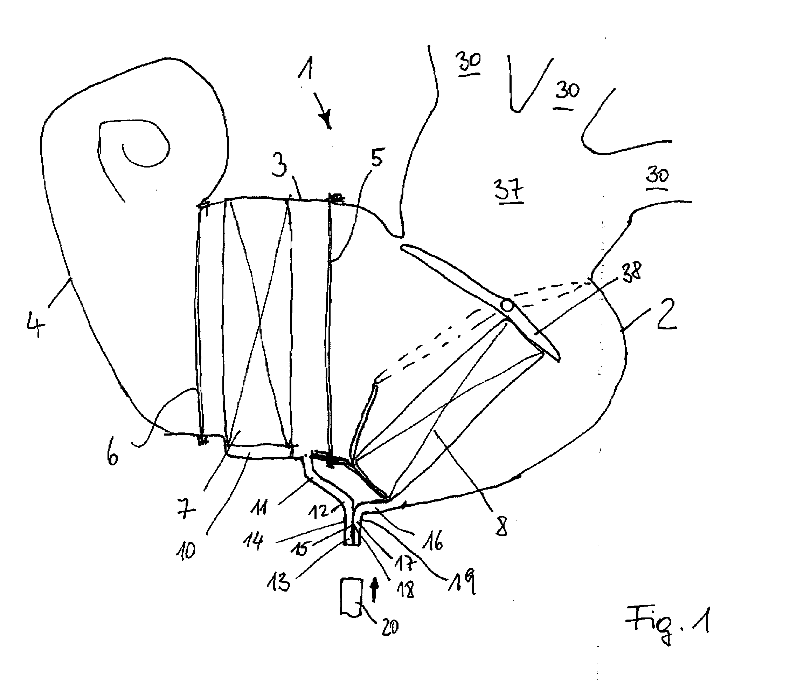

In Fig. 1 ist der Schnitt durch das Gehäuse 1 einer Klimaanlage dargestellt, wobei dieses Gehäuse 1 aus im Wesentlichen drei Baugruppen 2, 3, 4 oder Gehäuseteilen besteht. Die Trennungsebene zwischen dem ersten Gehäuseteil 2 und dem zweiten Gehäuseteil 3 ist in Fig. 1 mit 5, die Trennungsebene zwischen dem ersten Gehäuseteil 2 und einem Gebläsegehäuseteil 4 mit 6 bezeichnet. In dem Gehäuseteil 3 der Klimaanlage ist angrenzend an einen Diffusor des Gebläsegehäuses 4 ein Kältemittelverdampfer 7 angeordnet, der vom Gesamtluftstrom des Gebläses beaufschlagt wird. In dem zweiten Gehäuseteil 2 ist ein vom Kühlwasser des Motors des Kraftfahrzeugs durchflossener Heizkörper 8 angeordnet, der - je nach Warmluftbedarf im Fahrgastraum - von dem aus dem Kältemittelverdampfer 7 austretenden Luftstrom beaufschlagt wird. Weiter wird der Luftstrom den Ausströmdüsen über Luftkanäle 30 zugeleitet. Des Weiteren ist im ersten Gehäuseteil 2 eine Mischkammer 37 mit einer Temperaturmischklappe 38 oberhalb des Heizkörpers 8 angeordnet. Der Verdampfer 7 und der Heizkörper 8 sind also jeweils in getrennten Gehäuseteilen 2, 3 angeordnet, die entlang der Trennebene 5 insbesondere im Wesentlichen luftdicht zusammengebaut werden.

Durch die Abkühlung des Luftstroms im Kältemittelverdampfer 7 schlägt sich die im Luftstrom enthaltene Feuchtigkeit an der kühlen Oberfläche des Kältemittelverdampfers 7 nieder. Dadurch entstehen Wassertropfen an der Ausströmseite des Kältemittelverdampfers 7, die entweder aufgrund der Schwerkraft nach unten tropfen, oder - bei hoher Luftströmgeschwindigkeit - in Richtung auf den Heizkörper 8 mitgerissen werden. Bei kompakten Klimaanlagen und den erforderlichen hohen Strömungsgeschwindigkeiten, ist es nicht zu vermeiden, dass Wassertropfen an der Austrittsseite des Kältemittelverdampfers 7 vom Luftstrom mitgerissen und an die gegenüberliegende Seite des zweiten Gehäuseteils 2, insbesondere bei einer Stellung der Mischklappe 38, in der sie den Durchtritt durch den Heizkörper 8 schließt (in Fig.1 gestrichelt dargestellt), geworfen werden und dann an der Innenwand des Gehäuseteils 2 herunter laufen.

Der Verdampfer 7 ist im Gehäuseteil 3 beispielsweise über Ausnehmungen im Gehäuse oder über vorspringende Bereiche in seiner Lage fixiert. Unterhalb des Verdampfers 7 ist ein Wannenbereich 10 vorgesehen, in der sich das Kondenswasser sammeln kann. Einstückig an diesem Wannenbereich 10 ist ein erster Kondenswasserablauf 11 vorgesehen, der an seinem Anschlussbereich an dem Wannenbereich 10 rohrförmig, mit im Wesentlichen kreisrundem Querschnitt ausgebildet ist. Am unteren Ende des ersten Kondenswasserablaufs 11 ist ein erstes Auslaufende 13 vorgesehen. An der mit 12 bezeichneten Stelle ist eine Krümmung des Ablaufs 11 vorgesehen an dem dieser von einem im Wesentlichen kreisförmigen Querschnitt in einen kreissegmentförmigen Querschnitt übergeht.

Das rohrförmige Auslaufende13 ist in Form eines Teilzylinders ausgeführt mit einer im Wesentlichen eben oder plan ausgeführten Anlagefläche 15 und einer kreiszylindrischen Mantelfläche 14.

Im Bereich unterhalb des Heizkörpers 8 ist ein zweiter Kondenswasserablauf 16 in Form eines kurzen Stutzens vorgesehen, wobei dieser einstückig mit dem Gehäuseteil 2 ausgeführt ist. Auch der Kondenswasserablauf 16 weist an seinem Auslaufende 17 einen im Wesentlichen kreisförmigen Querschnitt auf, wobei im vorliegenden Fall aufgrund der im Vergleich zur unterhalb des Verdampfers anfallenden geringeren Menge an Kondenswasser, der Querschnitt des Auslaufendes 17 des zweiten Kondenswasserablaufs 16 kleiner ausgeführt ist, als der Querschnitt des Auslaufendes 13 des ersten Kondenswasserablaufs 11. Das rohrförmige Auslaufende17 des zweiten Kondenswasserablaufs 16 ist wiederum in Form eines Teilzylinders ausgeführt mit einer im Wesentlichen eben oder plan ausgeführten Anlagefläche 18 und einer kreiszylindrischen Mantelfläche 19.

Die beiden Gehäuseteile 2, 3 werden getrennt voneinander hergestellt und vorzugsweise nach Montage der Einbauteile, wie beispielsweise des Verdampfers 7, des Heizkörpers 8, der Temperaturmischklappe 38 und weiterer nicht in Fig.1 dargestellter Klappen oder Filter entlang der Trennebene 5 aneinander montiert. Während dieses Montageprozesses kommen die plan ausgeführten Flächen 15, 18 beider Auslaufenden 13, 17 zueinander in Anlage, wobei vorteilhafterweise Verrastmittel vorgesehen sind, mittels derer die Auslaufenden 13, 17 in ihrer Lage zueinander fixiert werden. Die kreissegmentförmigen Querschnitte der beiden Auslaufenden 13, 17 sind so ausgeführt, dass diese im zusammengebauten Zustand einen kreisförmigen Querschnitt und damit einen gemeinsamen Leitungsanschlussbereich bilden. Um das Kondenswasser in den Außenbereich des Fahrzeugs abzuführen ist ein Schlauch 20 vorgesehen der über die beiden Auslaufenden 13, 17 gesteckt wird und gegebenenfalls über einen Presssitz oder ein Befestigungsmittel, beispielsweise eine Rohrschelle befestigt wird.

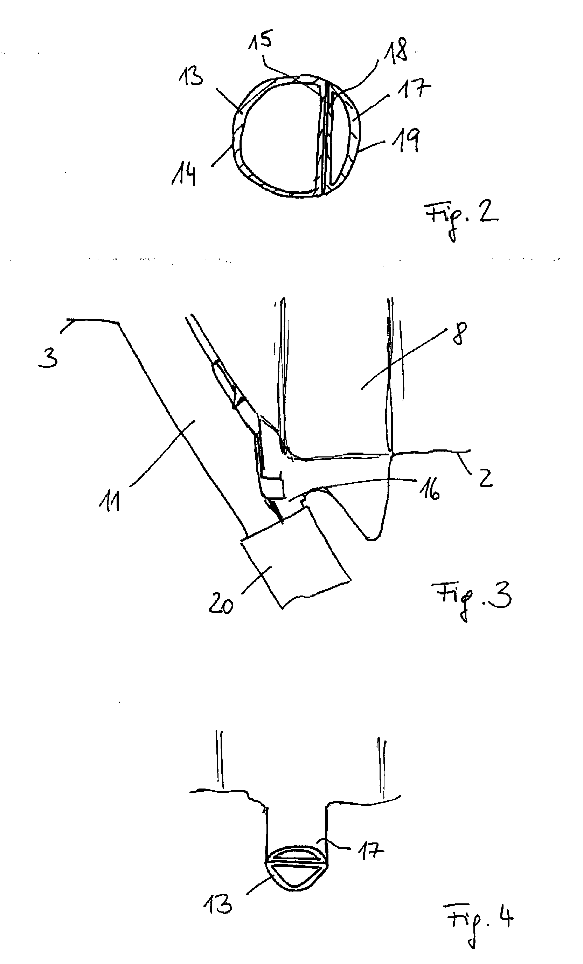

Der Zusammenführungsbereichs der zwei Kondenswasserabläufe 11, 16 der in Fig.1 dargestellten Klimaanlage als Schnitt durch die Auslaufenden 13, 17 ist in Fig. 2 dargestellt. Die Auslaufenden 13, 17 sind im dargestellten zusammengebauten Zustand mittels der Anlageflächen 15, 18 in Kontakt zueinander, wobei auch ein geringer Spalt zwischen den Anlageflächen denkbar ist. Die beiden Mantelflächen 14, 19 bilden zusammen einen gemeinsamen Leitungsanschlussbereich mit im Wesentlichen kreisförmiger Kontur, über den sich ein nicht dargestellter Schlauch zur Weiterleitung des anfallenden Kondenswassers stülpen lässt.

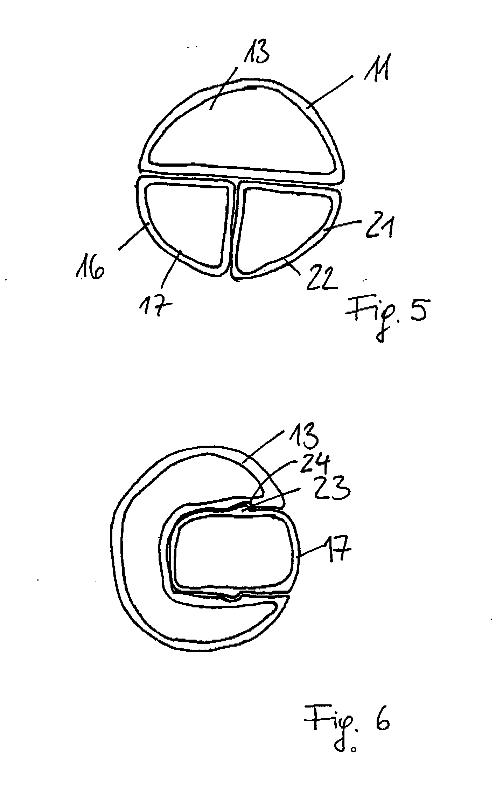

In Fig. 3 ist eine detaillierte Ansicht des Zusammenführungsbereichs zweier Kondenswasserabläufe 11, 16 aus unterschiedlichen Gehäuseteilen 2, 3 einer Klimaanlage dargestellt. Im Gehäuseteil 2 ist im Unterschied zum in Fig. 1 dargestellten Ausführungsbeispiel ein im Wesentlichen vertikal stehender Heizkörper 2 angeordnet, unterhalb dessen ein Kondenswasserablauf 16 vorgesehen ist. Der erste Kondenswasserablauf 11 führt wieder das Kondenswasser aus einem nicht dargestellten Verdampfer aus einem Gehäuseteil 3 ab. Über einen gemeinsamen Leitungsanschlussbereich, gebildet durch die beiden Auslaufenden 13, 17 ist ein Schlauch 20 zur Ableitung des Kondenswassers in den Außenbereich des Fahrzeugs gesteckt.

Die kreissegmentförmigen Querschnitte der Auslaufenden 13, 17 sind in einer Seitensansicht ohne den aufgesteckten Schlauch 20 in Fig. 4 zu sehen. Es wird deutlich, dass sich die Auslaufenden in ihrem Profil zu einem im Wesentlichen kreisförmigen Querschnitt ergänzen, so dass für einen herkömmlichen Schlauch keine Adapter oder Verzweigungen erforderlich sind.

In einem weiteren Ausführungsbeispiel ist die Zusammenführung dreier Kondenswasserabläufe 11, 16, 21, vorgesehen wobei diese beispielsweise unterhalb eines Verdampfers, unterhalb eines Heizkörpers und an einer weiteren Stelle des Gehäuses der Klimaanlage vorgesehen sind. Fig. 5 repräsentiert einen Schnitt durch die drei Auslaufenden 13, 17, 22 dieser drei Kondenswasserabläufe 11, 16, 21, wobei zu erkennen ist, dass der Querschnitt des ersten Auslaufendes 13 halbkreisförmig ausgebildet ist und die Querschnitte der beiden weiteren Auslaufenden 17, 22 viertelkreisförmige Sektoren darstellen. Die drei Auslaufenden ergänzen sich in ihren Außenabmessungen wiederum zu einer Kreisform, so dass ein Schlauch in einfacher Weise über die drei Auslaufenden gesteckt werden kann. Vorzugsweise sind die spitz zueinender zulaufenden Bereiche der Auslaufenden abgerundet.

Fig. 6 zeigt im Querschnitt durch zwei Kondenswasserabläufe ein erstes Auslaufende 13, das ein zweites Auslaufende 17 im Wesentlichen umgreift und mit diesem gemeinsam ebenfalls eine in etwa kreisförmige Außenkontur bildet. Die beiden Auslaufenden 13, 17 sind in ihrer Positionierung zueinander durch Rastmittel 23, 24 fixiert. Zwei Rastnasen 23 sind am Auslaufende 17 des umgriffenen Kondenswasserablaufs vorgesehen und greifen im zusammengebauten Zustand in im Auslaufende 13 des umgreifenden Kondenswasserablaufs vorgesehene Ausnehmungen 24 ein.

In bevorzugter Ausführung können die Auslaufenden, insbesondere an ihren zylindrischen Mantelflächen mit Noppen oder Wülsten versehen sein um die Befestigung und Dichtheit eines aufzusteckenden Schlauches zu unterstützen. Um das Aufstecken des Schlauches zu erleichtern ist es vorteilhaft wenn die Auslaufenden in ihrer Gesamtheit leicht konisch ausgeführt sind. Eine Befestigung des Schlauches kann zusätzlich mit einer Rohr- oder Schlauchschelle erfolgen.

Die Idee der Erfindung beschränkt sich nicht auf die Zusammenführung von 2 oder 3 Abläufen sondern ist auch für eine größere Zahl von Kondenswasserabläufen anwendbar. Allgemein gilt, dass für eine Vorrichtung mit n Flüssigkeitsabläufen, wobei n eine natürliche Zahl größer als 1 ist, die Summe der Querschnitte aller n Abläufe im Bereich der Auslaufenden im zusammengebauten Zustand umfänglich im Wesentlichen die Form eines Kreises ergeben soll. Anstelle einer Kreisform sind beispielsweise auch elliptische oder ähnliche auf den jeweiligen Innenquerschnitt eines aufzusteckenden Schlauches angepasste Formen denkbar.

## Patentansprüche

1. Vorrichtung mit einem Gehäuse (1), bestehend aus zumindest einer ersten Baugruppe (2), die zumindest einen ersten Flüssigkeitsablauf (11) aufweist und zumindest einer zweiten Baugruppe (3), die zumindest einen zweiten Flüssigkeitsablauf (16, 21) aufweist, **dadurch gekennzeichnet, dass** die Auslaufenden (13,17, 22) des zumindest ersten und zweiten Flüssigkeitsablaufs (11, 16, 21) so angeordnet sind, dass im Mündungsbereich ein gemeinsamer Leitungsanschlussbereich gebildet ist.

2. Vorrichtung nach Anspruch 1, **dadurch gekennzeichnet, dass** das zumindest erste (11) und zumindest zweite Auslaufende (13, 17) in Anlage zueinander angeordnet sind.

3. Vorrichtung nach Anspruch 1 oder 2, **dadurch gekennzeichnet, dass** der Querschnitt zumindest eines Auslaufendes (13, 17, 22) die Form eines Kreissektors oder eines Kreissegments aufweist.

4. Vorrichtung nach einem der vorangehenden Ansprüche, **dadurch gekennzeichnet, dass** das zumindest erste oder/und zumindest zweite Auslaufende (13, 17, 22) die Form eines Teilzylinders aufweisen.

5. Vorrichtung nach einem der vorangehenden Ansprüche, **dadurch gekennzeichnet, dass** im zusammengebauten Zustand der Baugruppen (2, 3) die Auslaufenden (13, 17, 22) der Flüssigkeitsabläufe (11, 16, 21) einen kreisförmigen oder ellipsenförmigen Querschnitt bilden.

6. Vorrichtung nach einem der vorangehenden Ansprüche, **dadurch gekennzeichnet, dass** die Auslaufenden (13, 17, 22) der Flüssigkeitsabläufe (11, 16, 21) in ihrer Lage zueinander festlegbar und oder verbindbar sind.

7. Vorrichtung nach einem der vorangehenden Ansprüche, **dadurch gekennzeichnet, dass** die Flüssigkeitsabläufe (11, 16, 21) Kondenswasserabläufe der Vorrichtung darstellen.

8. Vorrichtung nach einem der vorangehenden Ansprüche, **dadurch gekennzeichnet, dass** in zumindest einer Baugruppe (2) ein Verdampfer (7) aufgenommen ist.

9. Vorrichtung nach einem der vorangehenden Ansprüche, **dadurch gekennzeichnet, dass** in zumindest einer Baugruppe (3) ein Heizkörper (8) aufgenommen ist.

10. Vorrichtung nach einem der vorangehenden Ansprüche, **dadurch gekennzeichnet, dass** zumindest ein Flüssigkeitsablauf (11) in einem Bereich unterhalb eines Verdampfers (7) ausgebildet ist.

11. Vorrichtung nach einem der vorangehenden Ansprüche, **dadurch gekennzeichnet, dass** zumindest ein Flüssigkeitsablauf (16) in einem Bereich unterhalb eines Heizkörpers (8) ausgebildet ist.

12. Vorrichtung nach einem der vorangehenden Ansprüche, **dadurch gekennzeichnet, dass** die Vorrichtung eine Klimaanlage, insbesondere für ein Kraftfahrzeug ist.
